Europäisches Patentamt

European Patent Office

Office européen des brevets

(11) Numéro de publication : **0 416 987 B1**

(12) **FASCICULE DE BREVET EUROPEEN**

(45) Date de publication du fascicule du brevet :
**05.01.94 Bulletin 94/01**

(51) Int. Cl.$^5$ : **F16F 9/50, B60G 17/08**

(21) Numéro de dépôt : **90402420.5**

(22) Date de dépôt : **03.09.90**

(54) **Valve pour fluide hydraulique et amortisseur comportant une telle valve.**

(30) Priorité : **06.09.89 FR 8911662**

(43) Date de publication de la demande :
**13.03.91 Bulletin 91/11**

(45) Mention de la délivrance du brevet :
**05.01.94 Bulletin 94/01**

(84) Etats contractants désignés :
**DE ES FR GB IT**

(56) Documents cités :
**EP-A- 0 003 290
EP-A- 0 275 503
DE-A- 1 505 608**

(56) Documents cités :
**FR-A- 2 154 882
GB-A- 621 630
GB-A- 2 155 584
GB-A- 2 189 004**

(73) Titulaire : **Sirven, Jacques
34, rue de l'Orangerie
F-78000 Versailles (FR)**

(72) Inventeur : **Sirven, Jacques
34, rue de l'Orangerie
F-78000 Versailles (FR)**

(74) Mandataire : **Casalonga, Axel et al
BUREAU D.A. CASALONGA - JOSSE
Morassistrasse 8
D-80469 München (DE)**

EP 0 416 987 B1

Jouve, 18, rue Saint-Denis, 75001 PARIS

# Description

La présente invention est relative à une valve comprenant un clapet coopérant avec un siège et un ressort tendant à appliquer le clapet sur le siège, afin de limiter le débit de passage d'un fluide hydraulique à travers la valve. Une telle valve peut être avantageusement utilisée dans un amortisseur hydraulique, en particulier dans un amortisseur pour suspension de véhicule automobile.

Des valves de ce type sont fréquemment utilisées dans les dispositifs amortisseurs hydrauliques, de façon à définir une force d'amortissement qui augmente avec la vitesse de déplacement relative des deux parties de l'amortisseur. Des valves de ce type peuvent être montées de façon à agir lors d'un mouvement de compression de la tige de l'amortisseur ou lors d'un mouvement de détente, ou encore dans les deux sens.

Lors de l'utilisation de telles valves pour fluide hydraulique, on constate fréquemment des difficultés de fonctionnement lors de l'apparition de vibrations à haute fréquence, en raison du fait que, pour chaque mouvement saccadé nécessitant l'ouverture de la valve afin d'augmenter le débit de passage du fluide hydraulique, la valve doit passer d'une position complètement fermée ou presque complètement fermée à une position ouverte ou largement ouverte. L'inertie de la valve et en particulier du ressort agissant sur le clapet de la valve en direction de son siège, ne permet pas de suivre convenablement de telles vibrations dès que la fréquence dépasse une certaine valeur limite.

Par ailleurs, le choix de la valeur de la force d'amortissement dans un amortisseur hydraulique est toujours le fruit d'un compromis difficile à trouver. Il est en effet nécessaire de limiter la force d'amortissement lors d'un mouvement de compression d'amortisseur de façon qu'un choc brutal, tel que le passage d'une roue du véhicule sur une irrégularité du sol, ne provoque pas une accélération trop importante de l'ensemble de la masse suspendue.

Il a déjà été proposé (demande de brevet européen 3290 (SIRVEN)) de disposer dans un amortisseur de véhicule, une valve de commande pilotée par une pression différentielle, de façon telle que la valve s'ouvre lors d'un mouvement de compression rapide de la tige du piston, entraînant ainsi une force d'amortissement qui décroît à partir d'une vitesse de compression limite déterminée. Dans les amortisseurs de ce type, on constate également certaines difficultés lors de vibrations à haute fréquence, du fait d'une certaine inertie de la valve de commande pilotée.

La présente invention a pour objet une valve pour passage de fluide hydraulique qui permette de supprimer ces inconvénients. L'invention a en particulier pour objet une telle valve qui, utilisée dans un amortisseur hydraulique, permette de placer le clapet de la valve à tout moment dans une position d'équilibre prête à l'ouverture, éliminant ainsi les problèmes rencontrés auparavant lors de vibrations à haute fréquence.

Dans un amortisseur du type de celui décrit dans la demande de brevet européen mentionnée précédemment, on obtient également par l'utilisation d'une valve selon la présente invention, un pilotage instantané de la valve de commande et la suppression des "à-coup" lors de l'ouverture de la valve qui se trouve en permanence dans une position d'équilibre prête à l'ouverture.

L'invention a donc essentiellement pour objet une valve de ce type qui permette d'obtenir un effet de filtrage des hautes fréquences de variations de pression, en particulier lorsque la valve est montée dans un amortisseur hydraulique.

La valve, selon la présente invention, comprend un clapet coopérant avec un siège et un ressort tendant à appliquer le clapet sur le siège, afin de limiter le débit de passage d'un fluide hydraulique à travers la valve et des moyens pour faire varier la force exercée par le ressort sur le clapet en fonction du débit traversant la valve.

La valve peut, par exemple, comprendre un piston mobile sur lequel vient s'appuyer le ressort, le piston mobile se déplaçant dans un cylindre qu'il sépare en deux chambres. L'une de ces chambres est en communication avec le fluide hydraulique en aval ou en amont de la valve, tandis que l'autre chambre est en communication avec un espace intermédiaire dont le clapet constitue un premier orifice de passage et qui est muni, à un deuxième orifice de passage, d'une restriction définissant une chute de pression croissant avec le débit qui la traverse.

Dans un mode de réalisation avantageux, la communication de fluide hydraulique avec au moins l'une des chambres précitées, se fait par l'intermédiaire de restrictions supplémentaires de filtrage des hautes fréquences.

Dans un mode de réalisation, l'une des chambres précitées est en communication avec le fluide hydraulique en aval de la valve et est disposée de façon que la pression du fluide hydraulique s'y trouvant tende à diminuer la force exercée par le ressort sur le clapet. La restriction définissant le passage limité précité est placée sur l'écoulement issu de l'espace intermédiaire, le liquide hydraulique pénétrant dans ledit espace par le clapet.

Dans un autre mode de réalisation, l'une des chambres est en communication avec le fluide hydraulique en amont de la valve et est disposée de façon que la pression du fluide hydraulique s'y trouvant tende à augmenter la force exercée par le ressort sur le clapet. La restriction définissant le passage limité précité est alors placée en amont de l'écoulement pénétrant dans l'espace intermédiaire, le liquide hydraulique s'échappant de l'espace intermédiaire par un clapet.

Dans tous le cas, les restrictions peuvent comprendre un clapet anti-retour.

Grâce aux dispositions de la présente invention, la contrainte du ressort agissant sur le clapet varie en fonction du débit traversant la valve. Cette contrainte est faible ou même quasiment nulle quand le débit est nul et croît avec le débit. Les variations rapides de la contrainte du ressort sont évitées lorsqu'une restriction de filtrage est interposée dans le passage de fluide hydraulique, comme indiqué précédemment.

La valve, selon la présente invention, peut être utilisée dans tous types d'amortisseurs, notamment d'amortissseurs de suspension pour véhicule automobile du type comportant un cylindre principal contenant un fluide hydraulique, un piston principal actionné par une tige définissant dans le cylindre une première chambre principale et une deuxième chambre principale, ladite deuxième chambre principale contenant la tige et un réservoir de fluide pouvant communiquer avec la première chambre principale. Le passage du fluide hydraulique d'une chambre principale à l'autre se fait à travers une valve conforme à l'invention, dans laquelle la contrainte du ressort varie en fonction du débit traversant la valve.

La valve peut être montée dans le corps même de l'amortisseur, par exemple dans le piston principal de l'amortisseur ou dans un élément de cloison lié au cylindre principal.

La valve de l'invention peut être utilisée dans un amortisseur monotube ou dans un amortisseur bitube. Elle peut être montée de façon à agir en compression, en détente ou pour les deux mouvements. Dans un amortisseur du type bitube, la valve est montée à une extrémité du cylindre principal, lequel est entouré d'une enveloppe externe comprenant le réservoir et définissant avec le cylindre principal un espace annulaire. La valve de l'invention peut également être utilisée dans une suspension hydropneumatique.

Enfin, la valve de l'invention peut être utilisée comme valve de commande pilotée dans un amortisseur dont la force d'amortissement décroît, à partir d'une vitesse limite de déplacement de la tige de l'amortisseur. Dans ce cas, une restriction de commande est disposée entre la première chambre principale et le réservoir de l'amortisseur. Le clapet de la valve est soumis à une force supplémentaire tendant à le fermer et résultant d'une pression sensiblement constante d'un gaz de référence, de façon à entraîner l'ouverture de la valve lors d'un mouvement de compression rapide de la tige. La force supplémentaire précitée peut s'exercer directement sur le clapet ou, dans une variante, sur le ressort, en augmentant alors la force exercée par le ressort sur le clapet.

La chambre de référence comprend une paroi mobile qui peut être définie par un piston supplémentaire mobile ou par une membrane souple qui présente l'avantage de n'entraîner aucun frottement.

Dans le cas d'utilisation d'une telle membrane, il peut cependant être avantageux, pour améliorer la précision du réglage de la force d'amortissement, d'adjoindre à la membrane, un piston supplémentaire définissant une troisième chambre mise en communication avec la première chambre principale de l'amortisseur . De cette manière, les caractéristiques géométriques de la valve restent définies avec précision malgré l'utilisation d'une membrane souple comme paroi mobile de la chambre de référence.

Le réservoir de l'amortisseur peut contenir en partie un gaz à la même pression que le gaz de référence, une communication pouvant alors être établie entre le réservoir et une chambre contenant le gaz de référence.

Dans un mode de réalisation avantageux d'un amortisseur de ce type, un bloc élastique est en outre monté dans l'amortisseur, la fixation de l'amortisseur se faisant par l'intermédiaire dudit bloc élastique, de façon à provoquer l'ouverture de la valve lors d'un mouvement de compression rapide de la tige.

L'invention sera bien comprise à l'étude de quelques modes de réalisation décrits à titre d'exemples nullement limitatifs et illustrés par les dessins annexés, sur lesquels :

la figure 1 est une vue schématique en coupe d'un amortisseur monotube comportant une valve selon l'invention, montée dans le piston;
la figure 2 illustre les courbes de variations de certaines différences de pression du fluide se trouvant dans l'amortisseur, en fonction du débit qui traverse la valve de l'amortisseur illustré sur la figure 1;
la figure 3 est une vue schématique en coupe analogue à la figure 1, d'une variante d'amortisseur monotube équipé d'une valve selon l'invention;
la figure 4 est une vue schématique en coupe d'un mode de réalisation d'un amortisseur bitube équipé d'une valve selon la présente invention;
la figure 5 est une vue en coupe schématique d'un autre mode de réalisation d'un amortisseur monotube, dans lequel la valve de commande montée dans le piston est une valve pilotée;
la figure 6 est une vue en coupe schématique d'une variante de l'amortisseur de la figure 5; et
la figure 7 est une vue en coupe d'une autre variante de la figure 5.

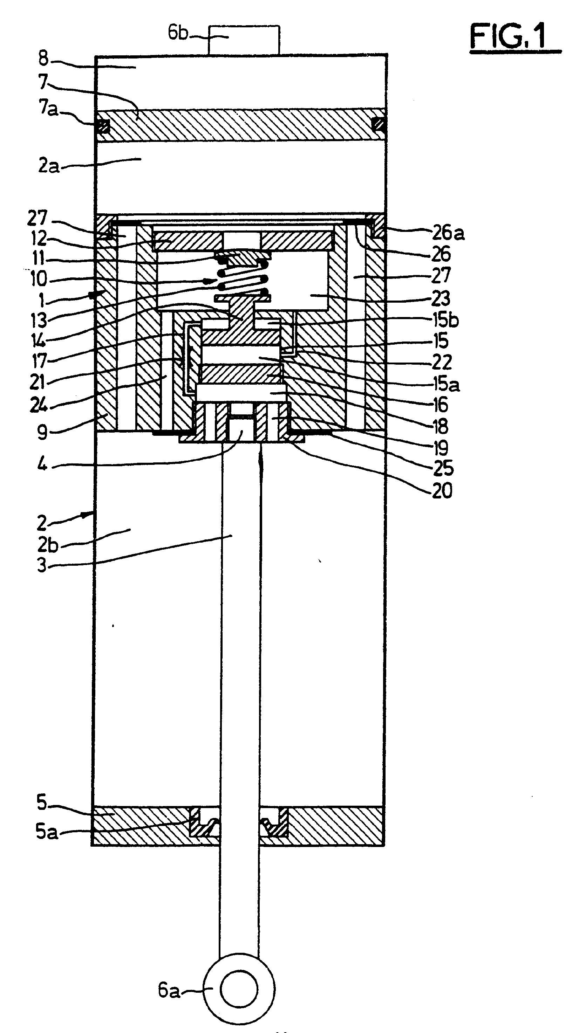

Tel qu'il est illustré sur la figure 1, l'amortisseur selon la présente invention, utilisable notamment pour une suspension de véhicule, comprend un piston 1 qui peut coulisser à l'intérieur d'un cylindre 2 et définit dans celui-ci une première chambre principale 2a, côté fond du piston 1, et une deuxième chambre principale 2b qui renferme la tige 3 rendue solidaire du piston 1, par exemple au moyen de son extrémité filetée 4. Le cylindre 2 est solidaire à son extrémité inférieure d'une pièce de fermeture 5, comportant un alésage central muni d'une bague d'étanchéité 5a à travers laquelle passe la tige 3 du piston. A son extrémité libre, la tige 3 présente, dans le mode de réalisation illustré, un anneau d'accrochage 6a qui peut être relié à la roue du véhicule automobile. A l'extrémité opposée, le cylindre 2 est fermé et comporte un élément d'accrochage 6b, par exemple fileté, qui peut être solidarisé à la caisse du véhicule. Un piston auxiliaire flottant 7 est monté dans la première chambre principale 2a, de façon à pouvoir coulisser dans le cylindre 2 de manière étanche, grâce à l'existence d'un joint 7a définissant ainsi dans la partie supérieure du cylindre 2 une chambre 8 remplie d'un gaz, tel que de l'air, de préférence sous pression.

Le reste du cylindre 2 est rempli d'un fluide hydraulique, tel que de l'huile.

Le piston 1 comprend un corps de piston 9 muni d'un certain nombre de passages pour le fluide hydraulique et à l'intérieur duquel est montée une valve, référencée 10 dans son ensemble et montée, dans l'exemple illustré, de façon à autoriser un passage limité de fluide hydraulique depuis la première chambre principale 2a vers la deuxième chambre principale 2b, lors d'un mouvement de compression de la tige 3 faisant se déplacer le piston 1 par rapport au cylindre 2, de bas en haut sur la figure 1.

La valve 10 comprend un clapet 11 appuyé sur un siège 12, par l'action d'un ressort hélicoïdal de compression 13. Un piston mobile 14 sert d'appui au ressort 13. Le piston mobile 14 se déplace à l'intérieur d'un cylindre 15 défini par un logement à l'intérieur du corps de piston 9 et obturé par une pièce de fermeture 16. Le piston 14 sépare le cylindre 15 en deux chambres, la chambre 15a et la chambre 15b.

La chambre 15b est en communication par le passage 17 avec un logement 18 du corps de piston 9, lequel communique à son tour directement avec la deuxième chambre 2b par les passages 19 pratiqués dans un bouchon fileté 20 fixé sur le corps de piston 9 et par l'intermédiaire duquel est également fixée l'extrémité 4 de la tige 3. Une restriction de filtrage 21 est placée sur le passage 17. Dans ces conditions, la chambre 15b se trouve en communication par les passages 17, 18 et 19 et à travers la restriction 21, avec la deuxième chambre principale 2b qui se trouve en aval de la valve 10 lors de l'action de cette dernière au moment d'un mouvement de compression de la tige 3. La pression du fluide hydraulique dans la chambre 15b tend à diminuer la contrainte du ressort 13.

La chambre 15a est reliée par le passage 22 à un espace intermédiaire 23 défini dans le corps de piston 9, à l'intérieur duquel se trouvent le ressort 13, le clapet 11, ainsi qu'une partie du piston 14. Le clapet 11 constitue, en association avec son siège 12, l'orifice d'entrée du fluide hydraulique dans l'espace 23, en provenance de la chambre principale 2a, lors d'un mouvement de compression de la tige 3. L'espace intermédiaire 23 peut, par ailleurs, communiquer avec la deuxième chambre principale 2b, par l'intermédiaire du passage 24 muni d'un clapet anti-retour 25 qui constitue une restriction et qui est fixé au moyen du bouchon fileté 20. La pression du fluide hydraulique se trouvant dans la chambre 15a tend à augmenter la contrainte du ressort 13.

Le corps de piston 9 comprend, en outre, des passages 27 faisant communiquer directement la deuxième chambre principale 2b avec la première chambre principale 2a, par l'intermédiaire d'un clapet anti-retour 26 monté sur le corps de piston 9 par la pièce filetée 26a et n'autorisant un passage que lors d'un mouvement de détente, le clapet 26 servant à créer la force d'amortissement nécessaire lors d'un tel mouvement de détente.

On va maintenant décrire le fonctionnement de la valve 10, conforme à l'invention.

Au repos, la précontrainte du ressort 13 est faible, le clapet 11 et la restriction 25 opposent peu de résistance au passage du fluide hydraulique depuis la première chambre principale 2a vers la deuxième chambre principale 2b. Cette résistance croît cependant régulièrement avec le débit traversant la valve 10 et la restriction 25. La restriction 25 est choisie de façon à ne provoquer qu'une faible chute de pression même pour les débits importants. Le réglage du clapet 11 et la force du ressort 13 sont en outre avantageusement tels que la force d'amortissement ainsi créée directement est faible et insuffisante pour amortir correctement la caisse du véhicule. Le complément de force d'amortissement est créé par l'action du piston 14.

Définissons maintenant les différentes pressions régnant dans l'amortisseur :

$p_1$ : pression dans la première chambre principale 2a;

$p_2$ : pression dans l'espace intermédiaire 23, ainsi que dans la première chambre 15a;

$p_3$ : pression dans la deuxième chambre principale 2b;

$p_4$ : pression dans la deuxième chambre 15b.

Si, pour simplifier l'exposé on admet, dans un premier temps, que la restriction 21 ne joue aucun rôle, on voit que le piston 14 subit la différence des pressions $p_2$ et $p_3$ qui tend à le déplacer vers le haut sur la figure 1 et, par conséquent, à comprimer le ressort 13, ce qui provoque une chute de pression à travers la valve 10, c'est-à-dire entre le clapet 11 et son siège 12.

Si S est la section utile du piston 14 et s la section du clapet 11, on obtient la relation suivante :

$$p_1 - p_2 = S/s\,(p_2 - p_3).$$

Dans la pratique, le rapport S/s peut être grand, de l'ordre de 5 à 10.

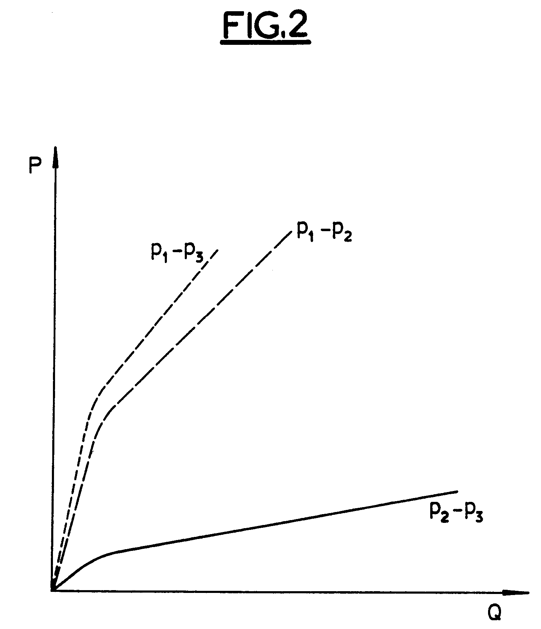

On voit sur la figure 2, en tirets, l'allure de la pression différentielle $p_1$-$p_2$, en fonction du débit Q traversant la valve 10. La chute de pression totale à travers la valve 10 est représentée par $p_1-p_3$, représentée également sur la figure 2 et qui est la somme des pressions différentielles $p_1-p_2$ et $p_2-p_3$.

On notera que cette caractéristique est obtenue, notamment en raison de la rigidité du clapet 25.

Si l'on considère maintenant l'action de la restriction 21 illustrée sur la figure 1 et disposée sur le passage 17, on voit que cette restriction a pour effet de freiner les mouvements du piston 14 et donc les variations de contrainte du ressort 13.

Pour un movement de la caisse du véhicule à une fréquence de l'ordre de 1 à 1,5 Hz et de grande amplitude, la restriction 21 a peu d'effet et la pression différentielle $p_1-p_2$ est proportionnelle à la pression différentielle $p_2-p_3$, comme illustré sur la figure 2. On obtient un excellent amortissement de la caisse du véhicule.

Lors d'un choc rapide, la pression différentielle $p_2-p_3$ varie très vite, mais reste faible et le piston 14 ne se déplace pratiquement pas pendant la durée de la percussion. La pression différentielle $p_1-p_2$ est pratiquement constante pendant toute la durée de la percussion qui, par conséquent, n'est pas transmise par l'amortisseur à la caisse du véhicule. La pression qui crée la force d'amortissement est la somme de ces deux pressions différentielles. La première suit toutes les variations du débit traversant la valve 10, donc du mouvement relatif de la roue par rapport à la caisse du véhicule, mais sa valeur reste faible. La seconde est beaucoup plus importante, mais un filtrage l'a débarrassée de toutes ses variations à haute fréquence.

La structure particulière de la valve 10 avec son piston 14, en association avec la restriction de filtrage 21, permet donc d'obtenir l'élimination des vibrations rencontrées fréquemment dans les amortisseurs de type classique lors de chocs rapides à haute fréquence.

Par ailleurs, même lorsque l'on supprime la restriction supplémentaire de filtrage 21, l'existence du piston 14 qui entraîne une variation de la contrainte appliquée au ressort 13, permet de faire en sorte que le clapet 11 se trouve toujours en position d'équilibre, prêt à l'ouverture, ce qui améliore notablement le fonctionnement de l'amortisseur.

Par rapport au mode de réalisation illustré sur la figure 1, on peut procéder à un certain nombre de modifications de structure, sans que le résultat en soit pour autant sensiblement modifié. C'est ainsi que la restriction de filtrage 21, au lieu d'être placée sur le passage 17, peut être placée sur le passage 22. On peut également prévoir une restriction de filtrage sur les deux passages 17 et 22. Ces restrictions peuvent, dans la pratique, être constituées de plusieurs orifices de petit diamètre dont certains peuvent comporter des dispositifs ou clapets anti-retour, empêchant totalement le fluide hydraulique de passer dans un sens. On peut, de la sorte, freiner plus le piston 14 quand il tend à comprimer le ressort 13 que lorsqu'il fait décroître la contrainte du ressort 13 ou prévoir d'autres réglages, afin d'obtenir l'effet inverse.

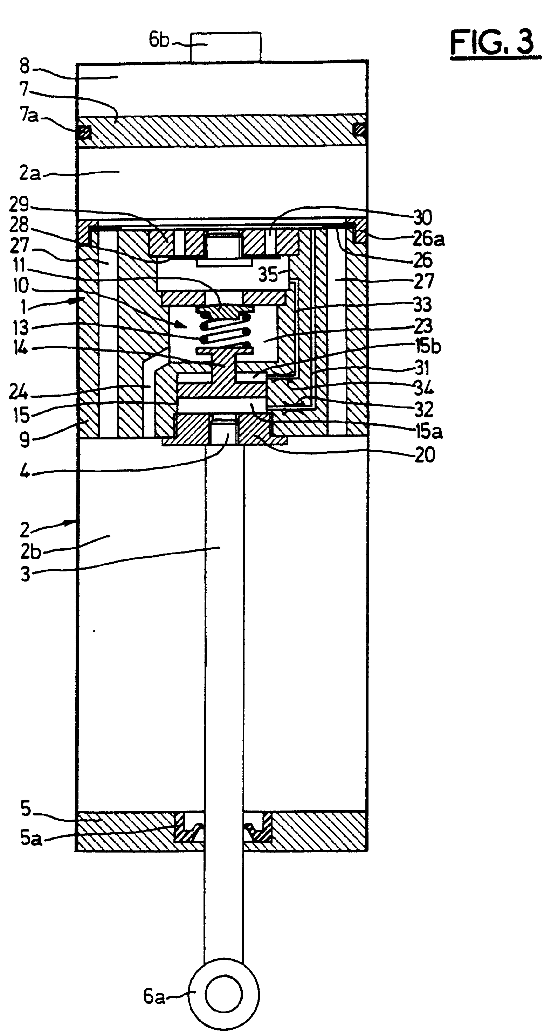

Dans le mode de réalisation illustré sur la figure 1, la restriction 25 est située en aval du clapet 11 de la valve 10. Il est possible de disposer au contraire une telle restriction en amont de la valve 10. La figure 3 illustre un tel mode de réalisation. Sur cette figure où les éléments identiques portent les mêmes références, un clapet anti-retour 28 est en effet monté en amont de la valve 10 sur une pièce de fermeture 29 fixée au corps de piston 9 et comportant des passages 30, de façon à permettre un passage de fluide hydraulique uniquement en provenance de la première chambre principale 2a, vers la deuxième chambre principale 2b, en passant par la valve 10, l'espace intermédiaire 23 et le passage 24 qui y débouche cette fois directement sans aucune restriction dans la deuxième chambre 2b.

Dans ce mode de réalisation, la chambre 15a est en communication par le passage 31 muni d'une restriction de filtrage 32 avec la première chambre principale 2a, c'est-à-dire en amont du clapet anti-retour 28. La pression régnant dans la chambre 15a tend à augmenter la contrainte du ressort 13. La deuxième chambre 15b est en communication par le passage 33, comportant la restriction de filtrage 34 avec un logement 35 du corps de piston 9 situé en amont du clapet 11 et en aval du clapet anti-retour 28. La pression régnant dans la chambre 15b tend à diminuer la contrainte du ressort 13.

On notera que les appellations "aval" et "amont" utilisées dans la présente description, correspondent au déplacement du fluide hydraulique lors d'un mouvement de compression du piston 1 dans le cylindre 2.

Le fonctionnement de l'amortisseur illustré sur la figure 3 ne se différencie pas sensiblement de celui de l'amortisseur illustré sur la figure 1. Comme précédemment, les mouvements du piston 14 qui dépendent du débit traversant la valve 10, permettent de faire varier la contrainte du ressort 13. De plus, dans le cas où les restrictions de filtrage 32 et 34 sont prévues comme illustré, on obtient un filtrage des vibrations à haute fréquence.

Dans les modes de réalisation illustrés sur les figures 1 et 3, la restriction 25 ou 28 est traversée par le même débit de fluide hydraulique que la valve 10. On peut cependant faire en sorte que seule une fraction constante du débit traversant la valve 10 passe par les restrictions en question.

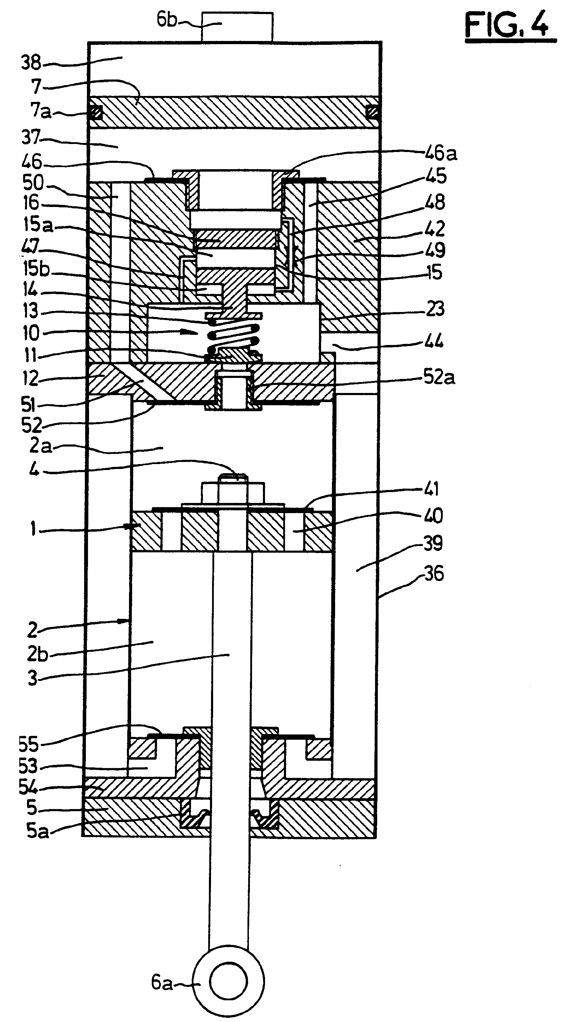

La figure 4 illustre un mode de réalisation d'une telle variante appliquée à un amortisseur bitube.

Dans ce mode de réalisation où les éléments identiques portent les mêmes références, le cylindre principal 2 est entouré d'une enveloppe externe 36 qui définit dans sa partie supérieure un réservoir de fluide hydraulique 37 comportant également une partie 38 remplie d'un gaz, tel que l'air, délimitée par le piston flottant 7. Entre le cylindre principal 2 et l'enveloppe cylindrique externe 36, est défini un espace annulaire 39.

Le piston 1 fixé à l'extrémité de la tige 3 comporte ici, simplement, des passages 40 associés à un clapet anti-retour 41 pour le passage du fluide hydraulique depuis la deuxième chambre principale 2b jusqu'à la première chambre principale 2a, lors d'un mouvement de détente de la tige 3.

La valve 10 de la présente invention est ici montée dans une pièce de fermeture supérieure 42 fixée à l'intérieur de l'enveloppe externe 36 et obturant l'espace annulaire 39. La pièce 42 présente un logement définissant le cylindre 15 à l'intérieur duquel se déplace comme précédemment le piston 14 modifiant la contrainte du ressort 13. La disposition de ces pièces est inversée par rapport aux modes de réalisation des figures 1 et 3, de sorte que lors d'un mouvement de compression du piston 1, le fluide hydraulique puisse passer de la première chambre principale 2a vers l'espace annulaire 39 d'une part, et le réservoir 37 d'autre part, en traversant l'espace intermédiaire 23. A cet effet, l'espace intermédiaire 23 communique par le passage 44 avec l'espace annulaire 39, et un passage 45 est prévu dans la pièce 42 pour le fluide hydraulique en direction du réservoir 37, ce passage coopérant avec une restriction réalisée ici sous la forme d'un clapet anti-retour 46 qui n'autorise le passage du fluide que dans ce sens, c'est-à-dire vers le réservoir 37. Le clapet 46 est fixé par un écrou 46a.

La première chambre 15a est ici en communication par le passage 47 avec l'espace intermédiaire 23. La pression qui y règne tend à augmenter la contrainte du ressort 13. La deuxième chambre 15b communique par le passage 48 muni d'une restriction de filtrage 49 avec le réservoir 37. La pression qui y règne tend à diminuer la contrainte du ressort 13.

L'amortisseur est complété par des passages 50 et 51 coopérant avec un clapet anti-retour 52 fixé à la pièce de fermeture 42 par l'intermédiaire du siège 12 et de l'écrou 52a. Une communication pour fluide hydraulique est rendue ainsi possible depuis le réservoir 37 vers la première chambre principale 2a et uniquement dans ce sens, lors d'un mouvement de détente du piston 1. Des passages 53 pratiqués dans une pièce de fermeture inférieure 54 et coopérant avec un clapet anti-retour 55 permettent par ailleurs, un passage du fluide hydraulique depuis l'espace annulaire 39 vers la deuxième chambre principale 2b lors d'un mouvement de compression.

Dans le mode de réalisation illustré sur la figure 4, la restriction constituée par le clapet anti-retour 46 n'est traversée que par la portion de fluide hydraulique chassée vers le réservoir 37 par l'enfoncement de la tige 3 dans le cylindre principal 2. Ce débit de fluide à travers le clapet 46 entraîne une différence de pression entre les deux faces du piston 14 qui agit sur le ressort 13 et la valve 10 comme dans les modes de réalisation précédents.

Bien que dans tous les exemples de réalisation, on ait représenté une valve 10 montée de façon à agir dans un mouvement de compression, on comprendra que la même valve puisse être montée de façon à agir lors d'un mouvement de détente du piston. Bien que la valve de l'invention ait été représentée à l'intérieur même du piston principal ou dans le corps de l'amortisseur, on comprendra qu'elle puisse également être montée dans un élément séparé relié par des canalisations au vérin de suspension proprement dit.

La valve de l'invention peut également être appliquée à des amortisseurs dans lesquels la force d'amortissement décroît lorsque la vitesse de compression dépasse une limite déterminée.

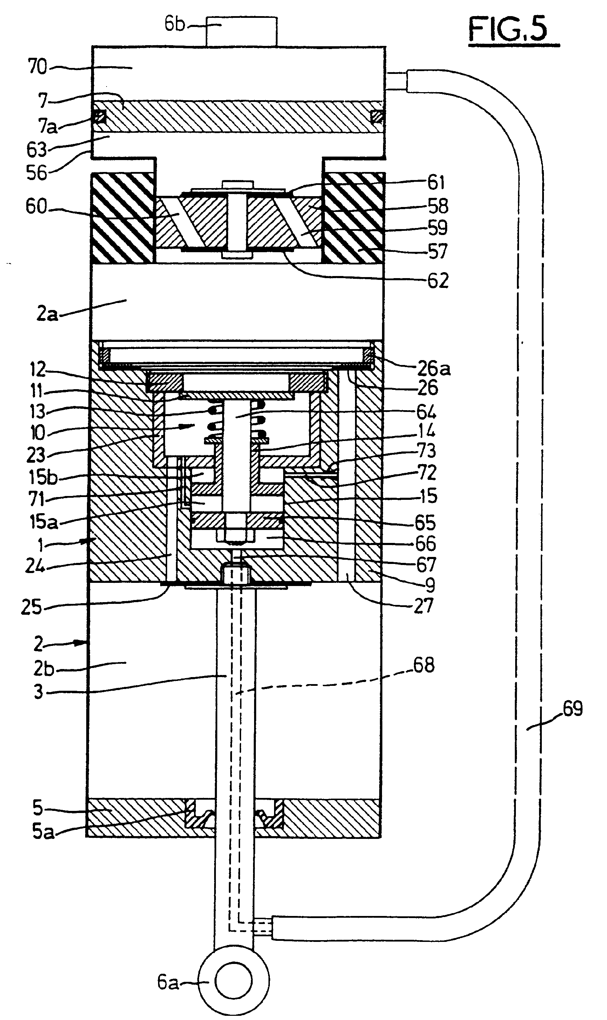

La figure 5 illustre un exemple d'un tel mode de réalisation. Dans cet exemple où les éléments identiques portent les mêmes références, le cylindre 2 est fixé au réservoir 56, lui-même solidaire de la caisse du véhicule, par l'intermédiaire d'un bloc annulaire élastique 57 réalisé par exemple en caoutchouc synthétique ou en élastomère. Une pièce de fermeture 58 comprend des passages 59 et 60, coopérant respectivement avec des clapets anti-retour 61 et 62, afin d'autoriser le passage du fluide hydraulique dans un seul sens, entre la partie 63 du réservoir 56 contenant du fluide hydraulique et la première chambre principale 2a. Le clapet anti-retour 61 définit une restriction de commande provoquant le pilotage de la valve 10 lors d'un mouvement de compression rapide.

Le clapet 11 de la valve 10 de l'invention est ici solidaire d'une tige 64 qui traverse axialement le piston mobile 14 et est fixée à son extrémité inférieure à un piston supplémentaire 65 qui peut coulisser de manière étanche à l'intérieur du cylindre 15. La partie inférieure du cylindre 15 définit ainsi une chambre de référence 66 qui est remplie d'un gaz, tel que l'air, à une pression sensiblement constante ou pression de référence. La chambre de référence 66 communique par le passage 67 et par un conduit 68 placé axialement dans la tige 3 avec un conduit souple externe 69 qui communique quant à lui avec la partie supérieure 70 du réservoir 56 rempli de gaz, tel que de l'air. Dans ces conditions, la partie supérieure du réservoir 56 se trouve à la même pression que la chambre de référence 66.

On retrouve également, dans ce mode de réalisation, un passage 71 faisant communiquer la chambre 15a avec l'espace intermédiaire 23, ainsi qu'un passage 72 présentant une restriction de filtrate 73 faisant communiquer la deuxième chambre 15b avec la deuxième chambre principale 2b en débouchant dans le passage 27 pratiqué dans le corps 9 du piston 1. Le passage 27 coopère, comme dans les modes de réalisation illustrés sur les figures 1 et 3, avec le clapet anti-retour 26 lors d'un mouvement de détente.

Dans ce mode de réalisation, le clapet 11 de la valve 10 est soumis à l'action du ressort 13 tendant à fermer ledit clapet. Le ressort 13 est contraint par le piston mobile 14. D'autre part, le piston supplémentaire 65 est soumis à la pression constante du gaz régnant dans la chambre de référence 66 qui tend également à fermer le clapet 11. La valve 10 de l'invention joue donc ici le rôle supplémentaire d'une valve de commande pilotée, comme déjà décrit dans la demande de brevet européen 3290 (SIRVEN). Grâce à cette disposition, on obtient une diminution de la force d'amortissement au-delà d'une certaine vitesse de compression. De plus, lors d'une compression brusque, le bloc élastique 57 pénètre en partie à l'intérieur de la première chambre 2a, avant tout déplacement de compression de la tige, en diminuant le volume utile de ladite chambre, ce qui entraîne une augmentation de la pression du fluide hydraulique régnant dans ladite chambre et donc une action sur la valve de commande 10 pilotée par l'intermédiaire du piston supplémentaire 65.

Pour plus de précisions sur le fonctionnement de cette valve de commande pilotée, on pourra se référer au brevet européen ci-dessus mentionné.

Par ailleurs, grâce à la disposition selon l'invention, la contrainte du ressort 13 varie en fonction du débit traversant la valve 10, ce qui améliore notablement le fonctionnement. En effet, le clapet 11 de la valve 10 se trouve toujours dans une position d'équilibre prête à l'ouverture.

Bien que l'on ait prévu dans le mode de réalisation illustré sur la figure 5, l'existence d'une restriction de filtrate 73 sur le passage 72, on notera que cette restriction n'est pas indispensable dans cette structure d'amortisseur.

Les forces agissant sur le clapet 11 de la figure 5 sont les suivantes:
- la force R du ressort 13, tendant à fermer le clapet;
- la force hydraulique $p_1S$ tendant à l'ouvrir;
- la force hydraulique $p_2(S-s)$ tendant à le fermer;
- la force hydraulique $p_4s$ tendant à le fermer.

Avec

$p_1$   : pression dans la première chambre principale 2a et dans la chambre 15b.

$p_2$   : pression dans l'espace intermédiaire 23 et dans la chambre 15a.

$p_4$   : pression dans la chambre de référence 66, créée par l'existence de la restriction 61.

$S$    : section du clapet 11.

$s$    : section du piston supplémentaire 65.

On peut faire une autre répartition des forces pour faire apparaître la pression différentielle $(p_1-p_2)$ qui détermine la force d'amortissement :
- la force R du ressort 13, tendant à fermer le clapet;
- la force hydraulique $(p_1-p_2)$ $(S-s)$ tendant à l'ouvrir;

- la force hydraulique $(p_1-p_4)s$ tendant à l'ouvrir;

Il apparaît alors qu'il importe de maintenir le terme $(S-s)$ aussi constant que possible d'un amortisseur à l'autre pour éviter qu'une variation se reporte directement sur la force d'amortissement.

L'utilisation dans le mode de réalisation de la figure 5 d'un piston supplémentaire 65 fixé à l'extrémité de la tige 64 du clapet 11 permet d'obtenir une définition précise de la section s.

On peut cependant rencontrer dans un tel mode de réalisation des difficultés pour réaliser l'étanchéité qui doit être totale entre la chambre 15a remplie d'huile et la chambre de référence 66 remplie de gaz. Dans le mode de réalisation illustré sur la figure 5, cette étanchéité est assurée par un joint monté à la périphérie du piston supplémentaire 65. Cette construction entraîne cependant un certain frottement et qui peut dans certains cas nuire au fonctionnement du dispositif. Pour résoudre cette difficulté, on peut envisager de remplacer le piston supplémentaire 65 par une membrane souple supprimant ainsi tout frottement. Une telle membrane ne permet pas cependant de définir avec précision le volume de fluide déplacé, c'est-à-dire la section s du piston équivalent.

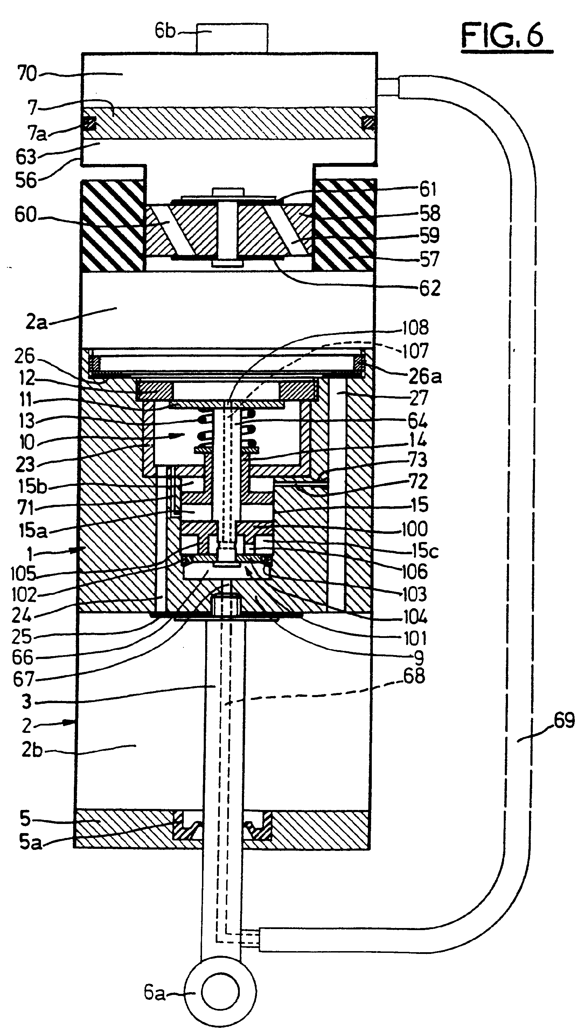

La variante illustrée sur la figure 6 permet de résoudre ces difficultés par l'utilisation d'une membrane et d'un piston supplémentaire associés permettant alors l'obtention des avantages d'étanchéité de la membrane et de la précision géométrique du piston supplémentaire.

Sur la figure 6 les éléments identiques portent les mêmes références que sur la figure 5. La figure 6 se différencie uniquement de la figure 5 par le remplacement du piston supplémentaire 65 muni d'un joint d'étanchéité par un piston supplémentaire référencé 100 dénué de joint d'étanchéité et un ensemble référencé 101 jouant le rôle de membrane souple. L'ensemble 101 comprend une bague métallique extérieure 102 sertie dans le cylindre 15, un anneau souple 103 réalisé par exemple en caoutchouc ou en une matière analogue et une rondelle rigide centrale 104 rendue solidaire de la tige 64 du clapet 11. Entre la rondelle rigide 104 et le piston supplémentaire 100 également solidaire de la tige 64 se trouve définie une troisième chambre 15c. La distance entre le piston supplémentaire 100 et la rondelle rigide 104 étant maintenue par une entretoise cylindrique 105 munie de perforations 106. La troisième chambre 15c est remplie de fluide hydraulique et est en communication avec la première chambre principale 2a de l'amortisseur par l'intermédiaire du perçage axial 107 pratiqué dans la tige 64 et du perçage 108 pratiqué dans le clapet 11.

Si l'on définit maintenant par s' la section de l'ensemble 101 tandis que s est la section du piston supplémentaire 100, les forces agissant sur le clapet 11 de la figure 6 sont les suivantes :
- la force R du ressort 13 tendant à fermer le cla-

pet;

- la force hydraulique $(p_1-p_2)S$ tendant à l'ouvrir;
- la force hydraulique $(p_1-p_2)s$ tendant à le fermer;
- la force hydraulique $(p_1-p_4)s'$ tendant à l'ouvrir.

Les deux premières forces hydrauliques peuvent se combiner sous la forme d'une seule force hydraulique $(p_1-p_2)(S-s)$ tendant à ouvrir le clapet.

Le fonctionnement est alors comparable au mode de réalisation de la figure 5, le terme $(p_1-p_4)s$ étant remplacé par le terme $(p_1-p_4)s'$. L'utilisation de l'ensemble 101 formant membrane souple supprime tout frottement lors du fonctionnement. De plus le terme $(S-s)$ est parfaitement défini géométriquement d'un amortisseur à l'autre. L'imprécision sur l'action de la pression de pilotage $(p_1-p_4)s'$ reste acceptable.

Par ailleurs, on obtient une excellente stabilité de la valve qui est donnée par la condition s < S ou (S-s) > O. Cette condition pouvant être réalisée indépendamment de la valeur de s' qui peut être inférieure, égale ou supérieure à s. L'action de la pression de pilotage $(p_1-p_4)$ créée par le clapet 61 peut être notablement renforcée si l'on choisit s' > s, la pression de pilotage agissant sur une surface plus importante.

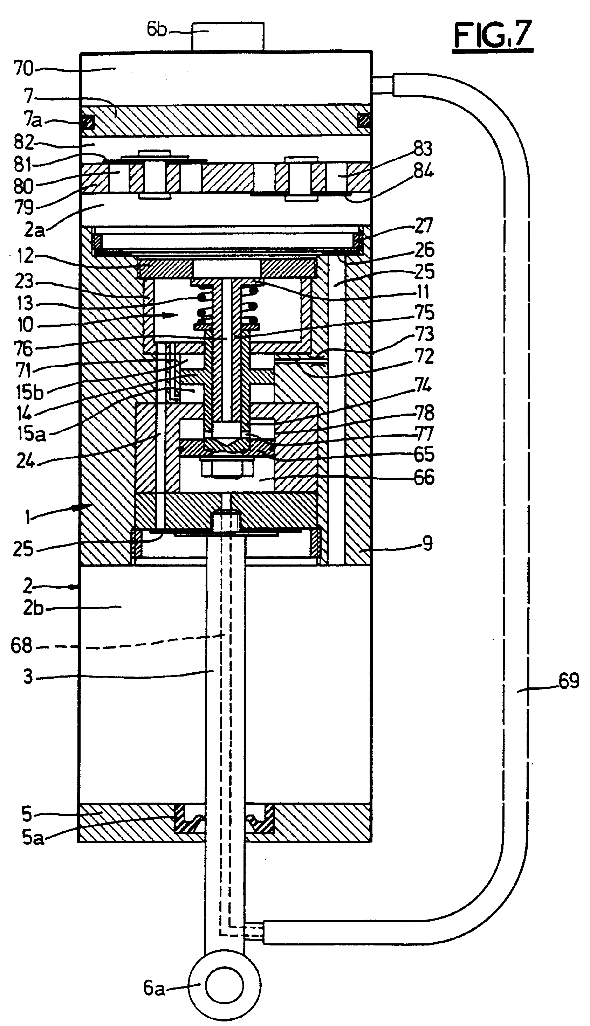

La variante de la figure 7 sur laquelle les éléments identiques portent les mêmes références, se différencie de celle de la figure 5 par le fait que la pression du gaz se trouvant dans la chambre de référence 66 s'exerce ici, non plus directement sur le clapet 11 comme dans le mode de réalisation de la figure 5, mais sur le piston 14.

A cet effet, dans le mode de réalisation illustré sur la figure 6, le piston supplémentaire 65 est monté à l'extrémité d'une prolongation 74 solidaire du piston 14. La prolongation 74 est tubulaire est elle reçoit de façon coulissante une tige centrale 75, solidaire du clapet 11. La tige 75 présente, en outre, un passage axial 76 qui traverse le clapet 11 et qui permet une communication par des passages 77 de la prolongation 74 avec un logement cylindrique 78 situé à l'intérieur du corps de piston 9 et jouant le rôle de cylindre pour le déplacement du piston supplémentaire 65. En d'autres termes, le logement 78 définit dans sa partie basse la chambre de référence 66, en communication, comme dans le mode de réalisation de la figure 5, avec la partie supérieure 70 remplie d'un gaz, tel que l'air, du réservoir de l'amortisseur, qui est ici constitué par la partie supérieure du cylindre 2.

Les communications de fluide hydraulique avec les chambres 15a et 15b sont identiques à celles illustrées sur la figure 5.

Dans ce mode de réalisation, la pression du gaz se trouvant dans la chambre de référence 66 agit donc sur le piston 14, modifiant ainsi la contrainte du ressort 13.

La structure de l'amortisseur est complétée dans ce mode de réalisation par une pièce de fermeture supérieure 79 fermant la première chambre 2a et comportant des passages 80 coopérant avec un clapet anti-retour 81 définissant une restriction de commande pour le passage du fluide depuis la première chambre 2a vers la partie 82 du réservoir remplie de fluide hydraulique, lors d'un mouvement de compression. La pièce de fermeture 79 comprend encore des passages 83 coopérant avec un clapet anti-retour 84 pour le passage du fluide hydraulique uniquement dans l'autre sens, lors d'un mouvement de détente.

Comme dans le mode de réalisation de la figure 5, la valve 10 conforme à l'invention, est ici montée de façon à jouer le rôle d'une valve de commande pilotée entraînant ainsi une diminution de la force d'amortissement au-delà d'une limite de vitesse de compression de la tige 3, comme cela est explicité dans le brevet européen précédemment mentionné.

Dans le mode de réalisation de la figure 7, la chambre de référence 66 est délimitée par le piston supplémentaire 65. On comprendra que l'on pourrait modifier une telle structure en remplaçant le piston mobile 65 par une membrane souple délimitant la chambre de référence 66. Cet élément n'agissant pas directement sur le clapet 11, son utilisation qui supprime le frottement du piston mobile 65 ne présente pas les inconvénients qui ont été résolus par la variante de la figure 6.

Dans le mode de réalisation de la figure 7, la force additionelle agissant sur le piston auxiliaire 65 a tendance à diminuer la tension du ressort 13 aux fortes vitesses d'enfoncement de la tige.

En variant les caractéristiques respectives des clapets anti-retour 25 et des clapets 61 ou 81 définissant la restriction de commande pilotant la valve, on peut modeler à volonté les caractéristiques de l'amortisseur lors d'un mouvement de compression. Dans la pratique, la restriction constituée par le clapet anti-retour 25 agit dès les basses vitesses de compression, en faisant croître la force d'amortissement, puis la chute de pression à travers le clapet anti-retour 25 croît très peu, tandis que la chute de pression à travers le clapet anti-retour 61 ou 81 continue d'augmenter pour agir en sens opposé.

On notera que, dans le mode de réalisation de la figure 7, on pourrait également envisager de monter un bloc élastique élastomère analogue au bloc 57 illustré sur les figures 5 et 6.

## Revendications

1. Valve comprenant un clapet (11) coopérant avec un siège (12) et un ressort (13) tendant à appliquer le clapet sur le siège afin de limiter le débit de passage d'un fluide hydraulique à travers la valve, caractérisée par le fait qu'elle comprend des moyens pour faire varier la force exercée par le ressort (13) sur le clapet (11) en fonction du débit traversant la valve.

2. Valve selon la revendication 1, caractérisée par le fait qu'elle comprend un piston mobile (14) sur lequel vient s'appuyer le ressort (13), le piston mobile se déplaçant dans un cylindre (15) qu'il sépare en deux chambres (15a,15b), l'une de ces chambres étant en communication avec le fluide hydraulique en aval ou en amont de la valve, l'autre chambre étant en communication avec un espace intermédiaire (23) dont le clapet (11) constitue un premier orifice de passage et qui est muni, à un deuxième orifice de passage (24), d'une restriction (25) définissant une chute de pression croissant avec le débit qui la traverse.

3. Valve selon la revendication 2, caractérisée par le fait que la communication du fluide hydraulique avec au moins l'une des chambres précitées (15a,15b) se fait par l'intermédiaire d'une restriction supplémentaire de filtrage (21).

4. Valve selon les revendications 2 ou 3, caractérisée par le fait que l'une des chambres précitées (15b) est en communication avec le fluide hydraulique en aval de la valve (10) et est disposée de façon que la pression du fluide hydraulique s'y trouvant tende à diminuer la force exercée par le ressort (13) sur le clapet (11), la restriction (25) délimitant le passage limité précité étant placée sur l'écoulement issu de l'espace intermédiaire (23), le liquide hydraulique pénétrant dans ledit espace par le clapet (11).

5. Valve selon les revendications 2 ou 3, caractérisée par le fait que l'une des chambres précitées (15a) est en communication avec le fluide hydraulique en amont de la valve (10) et est disposée de façon que la pression du fluide hydraulique s'y trouvant tende à augmenter la force exercée par le ressort (13) sur le clapet (11), la restriction (28) délimitant le passage limité précité étant placée en amont de l'écoulement pénétrant dans l'espace intermédiaire (23), le liquide hydraulique s'échappant dudit espace intermédiaire (23) par le clapet (11).

6. Valve selon l'une quelconque des revendications précédentes, caractérisée par le fait que la restriction précitée comprend un clapet anti-retour.

7. Amortisseur, notamment pour véhicule automobile, comportant un cylindre principal (2) contenant un fluide hydraulique, un piston principal (1) actionné par une tige (3) définissant dans le cylindre une première chambre principale (2a) et une deuxième chambre principale (2b), ladite deuxième chambre principale contenant la tige, caractérisé par le fait que le passage du fluide hydraulique d'une chambre principale à l'autre se fait à travers une valve selon l'une quelconque des revendications précédentes.

8. Amortisseur selon la revendication 7, caractérisé par le fait que la valve (10) est montée dans le corps de l'amortisseur.

9. Amortisseur selon la revendication 8, caractérisé par le fait que la valve (10) est montée dans le piston principal (1).

10. Amortisseur selon l'une quelconque des revendications 7 à 9, caractérisé par le fait qu'il comprend un réservoir de fluide pouvant communiquer avec la première chambre principale (2a).

11. Amortisseur selon l'une quelconque des revendications 7 à 9, caractérisé par le fait qu'il comprend un piston flottant (7) monté dans la première chambre principale (2a).

12. Amortisseur selon la revendication 9, caractérisé par le fait que la valve (10) est montée à une extrémité du cylindre principal (2), ledit cylindre principal (2) étant entouré d'une enveloppe externe (36) comprenant le réservoir et définissant avec le cylindre principal un espace annulaire (39).

13. Amortisseur selon l'une quelconque des revendications 7 à 12, caractérisé par le fait qu'une restriction de commande (61,81) est disposée entre la première chambre principale (2a) et le réservoir et que le clapet (11) de la valve (10) est soumis à une force supplémentaire tendant à le fermer et résultant d'une pression sensiblement constante d'un gaz de référence, de façon à entraîner l'ouverture de la valve (10) lors d'un mouvement de compression rapide de la tige.

14. Amortisseur selon la revendication 13, caractérisé par le fait que la force supplémentaire s'exerce directement sur le clapet (11).

15. Amortisseur selon la revendication 13, caractérisé par le fait que la force supplémentaire s'exerce sur le ressort (13) en augmentant la force qu'il exerce sur le clapet (11).

16. Amortisseur selon l'une des revendications 13 à 15, caractérisé par le fait que le gaz de référence occupe une chambre de référence (66) qui comprend une paroi mobile définie par un piston supplémentaire (65) mobile.

17. Amortisseur selon l'une des revendications 13 à 15, caractérisé par le fait que le gaz de référence occupe une chambre de référence (66) qui comprend une paroi mobile définie par une membrane souple (101).

18. Amortisseur selon la revendication 17, caractérisé par le fait que le clapet (11) est solidaire d'un piston supplémentaire (100) capable de se déplacer en même temps que ladite membrane souple (101), dans la chambre (15a) délimitée par le piston mobile (14) de la valve (10) et se trouvant en communication avec ledit espace intermédiaire (23), une troisième chambre (15c) étant définie entre ledit piston supplémentaire (100) et la membrane souple (101) et mise en communication avec la première chambre principale (2a) de l'amortisseur.

19. Amortisseur selon la revendication 18, caractérisé par le fait que le clapet (11) est solidaire d'une tige (64) sur laquelle sont fixés le piston supplémentaire (100) et, à une certaine distance, une rondelle rigide (104) présentant au voisinage de sa périphérie un anneau souple (103) jouant le rôle de membrane et relié de manière étanche à la paroi de la chambre de référence (66).

20. Amortisseur selon la revendication 19, caractérisé par le fait que la tige (64) et le clapet (11) sont percés pour faire communiquer la première chambre principale (2a) de l'amortisseur avec la troisième chambre (15c) entre le piston supplémentaire (100) et la membrane (101).

21. Amortisseur selon l'une quelconque des revendications 13 à 20, caractérisé par le fait que le réservoir contient en partie un gaz à la même pression que le gaz de référence.

22. Amortisseur selon l'une quelconque des revendications 13 à 21, caractérisé par le fait qu'un bloc élastique (57) est monté dans l'amortisseur, la fixation de l'amortisseur se faisant par l'intermédiaire dudit bloc élastique, de façon à provoquer l'ouverture de la valve (10) lors d'un mouvement de compression rapide de la tige.

**Patentansprüche**

1. Ventil, das ein Ventilverschlußglied (11) umfaßt, das mit einem Sitz (12) und einer Feder (13) zusammenwirkt, die bestrebt ist, das Ventilverschlußglied auf den Sitz zu drücken, um den Durchsatz eines Hydraulikfluids durch das Ventil zu begrenzen, dadurch gekennzeichnet, daß es Mittel umfaßt, um eine Veränderung der von der Feder (13) auf das Ventilverschlußglied (11) ausgeübten Kraft als Funktion des Durchflusses durch das Ventil zu bewirken.

2. Ventil nach Anspruch 1, dadurch gekennzeichnet, daß es einen beweglichen Kolben (14) umfaßt, auf dem sich die Feder (13) abstützt, wobei sich der bewegliche Kolben in einem Zylinder (15) verschiebt, den er in zwei Kammern (15a, 15b) aufteilt, wobei die eine dieser Kammern mit dem Hydraulikfluid strömungsabwärts oder strömungsaufwärts von dem Ventil und die andere Kammer mit einem Zwischenraum (23) in Verbindung steht, bei dem das Ventilverschlußglied (11) eine erste Durchlaßmündung bildet und der an einer zweiten Durchlaßmündung (24) mit einem Durchströmwiderstand (25) versehen ist, der einen Druckabfall festlegt, der mit dem durch diesen strömenden Durchfluß wächst.

3. Ventil nach Anspruch 2, dadurch gekennzeichnet, daß die Strömungsverbindung des Hydraulikfluids mit wenigstens einer der Kammern (15a, 15b) über einen zusätzlichen Filterdurchströmwiderstand (21) erfolgt.

4. Ventil nach einem der Ansprüche 2 oder 3, dadurch gekennzeichnet, daß die eine der Kammern (15b) mit dem Hydraulikfluid strömungsabwärts von dem Ventil (10) in Verbindung steht und so angeordnet ist, daß der dort herrschende Druck bestrebt ist, die von der Feder (13) auf das Ventilverschlußglied (11) ausgeübte Kraft zu vermindern, wobei der den begrenzten Durchlaß beschränkende Durchströmwiderstand (25) in dem aus dem Zwischenraum (23) kommenden Abfluß angeordnet ist und die Hydraulikflüssigkeit in den genannten Raum über das Ventilverschlußglied (11) eindringt.

5. Ventil nach den Ansprüchen 2 oder 3, dadurch gekennzeichnet, daß die eine der Kammern (15a) mit dem Hydraulikfluid strömungsaufwärts von dem Ventil (10) in Verbindung steht und so angeordnet ist, daß der dort herrschende Druck bestrebt ist, die von der Feder (13) auf das Ventilverschlußglied (11) ausgeübte Kraft zu erhöhen, wobei der den begrenzten Durchlaß beschränkende Durchströmwiderstand (28) vor dem in den Zwischenraum (23) eindringenden Abfluß angeordnet ist und die Hydraulikflüssigkeit aus dem Zwischenraum (23) über das ventilverschlußglied (11) entweicht.

6. Ventil nach einem der vorstehenden Ansprüche, dadurch gekennzeichnet, daß der vorerwähnte Durchströmwiderstand ein Rückschlagventil umfaßt.

7. Stoßdämpfer, insbesondere für Kraftfahrzeuge, mit einem ein Hydraulikfluid enthaltenden Hauptzylinder (2), einem durch eine Kolbenstange (3) betätigten Hauptkolben (1), der in den Zylinder eine erste Hauptkammer (2a) und eine zweite Hauptkammer (2b) abgrenzt, wobei die zweite Hauptkammer die Kolbenstange enthält, dadurch gekennzeichnet, daß der Durchlaß des Hydraulikfluids von der einen Hauptkammer zu der anderen durch ein Ventil nach einem der vorstehenden Ansprüche erfolgt.

8. Stoßdämpfer nach Anspruch 7, dadurch gekennzeichnet. daß das Ventil (10) innerhalb des Stoßdämpferkörpers angebracht ist.

9. Stoßdämpfer nach Anspruch 8, dadurch gekennzeichnet, daß das Ventil (10) innerhalb des Hauptkolbens (1) angebracht ist.

10. Stoßdämpfer nach einem der vorstehenden Ansprüche 7 bis 9, dadurch gekennzeichnet, daß er einen Fluid-Vorratsbehälter umfaßt, der mit der ersten Hauptkammer (2a) kommunizieren kann.

11. Stoßdämpfer nach einem der vorstehenden Ansprüche 7 bis 9, dadurch gekennzeichnet, daß er einen in der ersten Hauptkammer (2a) vorgesehenen Schwimmkolben (7) umfaßt.

12. Stoßdämpfer nach Anspruch 9, dadurch gekennzeichnet, daß das Ventil (10) an einem Ende des Hauptzylinders (2) angeordnet ist, wobei der Hauptzylinder (2) von einem äußeren Mantel (36) umgeben ist, der den Vorratsbehälter umfaßt und mit dem Hauptzylinder einen Ringraum (39) begrenzt.

13. Stoßdämpfer nach einem der vorstehenden Ansprüche 7 bis 12, dadurch gekennzeichnet, daß ein Steuerdurchströmwiderstand (61, 81) zwischen der ersten Hauptkammer (2a) und dem Vorratsbehälter angeordnet ist und daß das Ventilverschlußglied (11) des Ventils (10) einer zusätzlichen Kraft unterliegt, die bestrebt ist, es zu schließen und aus einem im wesentlichen konstanten Druck eines Bezugsgases resultiert, derart, daß eine schnelle Einschubbewegung der Kolbenstange die Öffnung des Ventils (10) zur Folge hat.

14. Stoßdämpfer nach Anspruch 13, dadurch gekennzeichnet, daß die zusätzliche Kraft direkt auf das Ventilverschlußglied (11) wirkt.

15. Stoßdämpfer nach Anspruch 13, dadurch gekennzeichnet, daß die zusätzliche Kraft auf die Feder (13) wirkt, indem sie die Kraft erhöht, die sie auf das ventilverschlußglied (11) ausübt.

16. Stoßdämpfer nach einem der Ansprüche 13 bis 15, dadurch gekennzeichnet, daß das Bezugsgas eine Bezugskammer (66) ausfüllt, die eine bewegliche Wand umfaßt, die durch einen beweglichen Zusatzkolben (65) festgelegt ist.

17. Stoßdämpfer nach einem der Ansprüche 13 bis 15, dadurch gekennzeichnet, daß das Bezugsgas eine Bezugskammer (66) ausfüllt, die eine bewegliche Wand umfaßt, die durch eine biegsame Membran (101) gebildet ist.

18. Stoßdämpfer nach Anspruch 17, dadurch gekennzeichnet, daß das Ventilverschlußglied (11) mit einem Zusatzkolben (100) verbunden ist, der in der Lage ist, sich gleichzeitig mit der biegsamen Membran (101) in der Kammer (15a) zu verschieben, die von dem beweglichen Kolben (14) des Ventils (10) begrenzt ist und die mit dem Zwischenraum (23) in Verbindung steht, daß eine dritte Kammer (15c) von dem Zusatzkolben (100) und der biegsamen Membran (101) begrenzt ist und mit der ersten Hauptkammer (2a) des Stoßdämpfers in Verbindung steht.

19. Stoßdämpfer nach Anspruch 18, dadurch gekennzeichnet, daß das Ventilverschlußglied (11) mit einer Kolbenstange (64) verbunden ist, an der der Zusatzkolben (100) und in einem bestimmten Abstand eine starre Scheibe (104) befestigt sind, die in der Nähe ihres Umfangs einen weichen Ring (103) aufweist, der die Rolle einer Membran spielt und mit der Wand der Bezugskammer (66) abgedichtet verbunden ist.

20. Stoßdämpfer nach Anspruch 19, dadurch gekennzeichnet, daß die Kolbenstange (64) und das Ventilverschlußglied (11) durchbohrt sind, um zwischen der ersten Hauptkammer (2a) des Stoßdämpfers und der dritten, zwischen dem Zusatzkolben (100) und der Membran (101) liegenden Kammer (15c) eine Verbindung herzustellen.

21. Stoßdämpfer nach einem der vorstehenden Ansprüche 13 bis 20, dadurch gekennzeichnet, daß der Vorratsbehälter zum Teil ein Gas mit demselben Druck wie das Bezugsgas enthält.

22. Stoßdämpfer nach einem der Ansprüche 13 bis 21, dadurch gekennzeichnet, daß ein elastischer Block (57) innerhalb des Stoßdämpfers angeordnet ist, wobei die Befestigung des Stoßdämpfers mit Hilfe des elastischen Blockes in der Weise erfolgt, daß bei einer schnellen Einschubbewegung der Kolbenstange die Öffnung des Ventils (10) hervorgerufen wird

## Claims

1. Valve comprising a shutter (11) which cooperates with a seat (12), and a spring (13) tending to press the shutter onto the seat, so as to limit the flow rate of a hydraulic fluid passing through the valve, characterized in that it comprises means for varying the force exerted by the spring (13) on the valve (11) as a function of the flow rate through the valve.

2. Valve according to Claim 1, characterized in that it comprises a movable piston (14) on which the spring (13) bears, the movable piston being displaced in a cylinder (15) which it separates into two chambers (15a, 15b), one of the chambers being in communication with the hydraulic fluid downstream or upstream of the valve, the other chamber being in communication with an intermediate space (23) whose shutter (11) constitutes a first passage orifice and which is equipped, at a second passage orifice (24), with a restriction (25) defining a pressure drop which increases with the flow rate passing through it.

3. Valve according to Claim 2, characterized in that the communication of the hydraulic fluid with at least one of the abovementioned chambers (15a, 15b) is effected via an additional filtering restriction (21).

4. Valve according to Claims 2 or 3, characterized in that one of the abovementioned chambers (15b) is in communication with the hydraulic fluid downstream of the valve (10) and is arranged in such a way that the pressure of the hydraulic fluid located therein tends to decrease the force exerted by the spring (13) on the shutter (11), the restriction (25) delimiting the above-mentioned limited passage being placed on the flow from the intermediate space (23), the hydraulic liquid penetrating into the said space via the shutter (11).

5. Valve according to Claim 2 or 3, characterized in that one of the abovementioned chambers (15a) is in communication with the hydraulic fluid upstream of the valve (10) and is arranged in such a way that the pressure of the hydraulic fluid located therein tends to increase the force exerted by the spring (13) on the shutter (11), the restriction (28) delimiting the above-mentioned limited passage being placed upstream of the flow penetrating into the intermediate space (23), the hydraulic liquid escaping from the said intermediate space (23) via the shutter (11).

6. Valve according to any one of the preceding claims, characterized in that the abovementioned restriction comprises a non-return valve.

7. Shock absorber, in particular for a motor vehicle, comprising a principal cylinder (2) containing a hydraulic fluid, a principal piston (1) actuated by a rod (3) defining a first principal chamber (2a) and a second principal chamber (2b) in the cylinder, the said second principal chamber containing the rod, characterized in that the passage of the hydraulic fluid from one principal chamber to the other is effected via a valve according to any one of the preceding claims.

8. Shock absorber according to Claim 7, characterized in that the valve (10) is mounted in the body of the shock absorber.

9. Shock absorber according to Claim 8, characterized in that the valve (10) is mounted in the principal piston (1).

10. Shock absorber according to any one of Claims 7 to 9, characterized in that it comprises a fluid reservoir able to with the first principal chamber (2a).

11. Shock absorber according to any one of Claims 7 to 9, characterized in that it comprises a floating piston (7) mounted in the first principal chamber (2a).

12. Shock absorber according to Claim 9, characterized in that the valve (10) is mounted at one end of the principal cylinder (2), the said principal cylinder (2) being surrounded by an outer casing (36) comprising the reservoir and defining with the principal cylinder an annular space (39).

13. Shock absorber according to any one of Claims 7 to 12, characterized in that a control restriction (61, 81) is arranged between the first principal chamber (2a) and the reservoir, and in that the shutter (11) of the valve (10) is subjected to an additional force tending to close it and resulting from a substantially constant pressure of a reference gas, so as to bring about the opening of the value (10) during a rapid compression movement of the rod.

14. Shock absorber according to Claim 13, characterized in that the additional force is exerted directly on the shutter (11).

15. Shock absorber according to Claim 13, characterized in that the additional force is exerted on the spring (13) while increasing the force which it exerts on the shutter (11).

16. Shock absorber according to any one of Claims 13 to 15, characterized in that the reference gas occupies a reference chamber (66) which comprises a movable wall defined by an additional movable piston (65).

17. Shock absorber according to any one of Claims 13 to 15, characterized in that the reference gas occupies a reference chamber (66) which comprises a movable wall defined by a flexible membrane (101).

18. Shock absorber according to Claim 17, characterized in that the shutter (11) is secured to an additional piston (100) capable of being displaced at the same time as the said flexible membrane (101), in the chamber (15a) delimited by the movable piston (14) of the valve (10) and being in communication with the said intermediate space (23), a third chamber (15c) being defined between the said additional piston (100) and the flexible membrane (101) and put in communication with the first principal chamber (2a) of the shock absorber.

19. Shock absorber according to Claim 18, characterized in that the shutter (11) is secured to a rod (64) on which are fixed the additional piston (100) and, at a certain distance, a rigid washer (104) having in the vicinity of its periphery a flexible ring (103) performing the function of membrane and connected in a sealing manner to the wall of the reference chamber (66).

20. Shock absorber according to Claim 19, characterized in that the rod ( 64 ) and the shutter (11) are drilled in order to cause the first principal chamber (2a) of the shock absorber to communicate with the third chamber (15c) between the additional piston (100) and the membrane (101).

21. Shock absorber according to any one of Claims 13 to 20, characterized in that the reservoir partly contains a gas at the same pressure as the reference gas.

22. Shock absorber according to any one of Claims 13 to 21, characterized in that an elastic unit (57) is mounted in the shock absorber, the shock absorber being fixed by means of the said elastic unit, so as to cause the opening of the valve (10) during a rapid compression movement of the rod.

FIG.1

# FIG.2

# FIG. 3

EP 0 416 987 B1

FIG. 4

FIG.5

EP 0 416 987 B1

FIG.6

FIG.7